# EUROPEAN PATENT APPLICATION

(11) **EP 0 540 489 A2**
(43) Date of publication of application: **05.05.1993**
(21) Application number: 92850251.7
(22) Date of filing: 23.10.1992
(51) Int. Cl.: G06F 9/38

(54) **Saving time when reading data variables stored in a memory device and decreasing the load of a pointer device**

(30) Priority: 29.10.1991 US 783775
(71) Applicant: TELEFONAKTIEBOLAGET L M ERICSSON, S-126 25 Stockholm (SE)
(72) Inventor: Wildling, Klaus, S-141 46 Huddinge (SE); Avsan, Oleg, S-141 46 Huddinge (SE); Carlsson, Karl-Johan Verner, S-171 71 Solna (SE)
(74) Representative: Lövgren, Tage

(57) **Abstract**

A data processing system (3) generates successive individual numbers and write and read orders respectively for transmitting data variables from the data processing system to a memory device (1), and vice versa, via a variable register (9) in which data variables are temporarily stored. A pointer device (2) connected to the memory device converts the individual numbers to memory pointer values, so as to provide access to storage locations (10) indicated thereby, these storage locations being assigned to individuals identified by the individual numbers. For reading variables stored in the memory device, a time saving facility is obtained by providing the variable register with an activating input (18), and by including an intermediate register (13), a comparator (14), a control signal generator (15) and a stop circuit (7). A first individual number is temporarily stored in the intermediate register. The comparator compares the first individual number with a second individual number obtained from the data processing system immediately after the first individual number. The control signal generator generates a control signal when the comparison shows equality and when the second individual number belongs to a read order. The stop circuit responds to the control signal, by stopping the calculation of the pointer value belonging to the second individual number. The activating input of the variable register responds to the control signal by activating transmission of the temporarily stored data variable to the data processing system.

## Description

### TECHNICAL FIELD

The present invention relates to a method and an apparatus for saving time when reading data variables stored in a memory device and for decreasing the load of a pointer device, wherein the pointer device controlled by a data processing system and connected exclusively to the memory device successively receives individual numbers, each of which is converted singly to its respective memory pointer value for the purpose of obtaining access to storage locations indicated thereby, said storage locations being assigned to an individual identified by means of an individual number, and wherein the memory device includes a variable register for storing temporarily a data variable which, in response to an individual-relative write and read order respectively is transmitted from the data processing system to the storage locations assigned to said individual, and vice versa.

### BACKGROUND PRIOR ART

In a function-block oriented data processing system, known from, e.g. U.S. Patent Specification No. 3,969,701, individual numbers are transmitted successively to pointer devices which are associated with respective function blocks, together with read/write orders, for the purpose of writing/reading individual-associated data variables into/from associated storage locations of the function blocks, via a variable register. In this case, the control central of the system has no knowledge of the internal memory organization of the function block, i.e. which of the storage locations intended for storing relevant variables are assigned a specific individual, but that the individual numbers are converted to memory pointer values by means of the pointer devices with the aid of tables. The storage locations of a particular memory associated with a function block are conventionally arranged in rows, wherein each storage location can be indicated by means of its particular row number and its particular bit index number, so as to define the order in which the storage locations are located within the rows. When stored in the memory, a data variable will occupy a number of storage locations, which are indicated by means of a memory pointer value which includes said number and also the row number and bit index number belonging to the storage location in which the variable commences. The storage locations intended for a variable may, at times, be spread over a number of rows.

Both the process of conversion from individual numbers to pointer values and the access to the storage locations indicated by the pointer value requires more time than that needed to achieve access to a complete storage location row with the aid of a directly applied row address when using a simple memory. U.S. Patent Specification No. 4,354,231, for instance, describes a method for eliminating the time loss caused by the conversion of the individual numbers to respective pointer values.

### DISCLOSURE OF THE INVENTION

Experience with function-block-oriented data processing systems shows that about 75% of the instructions directed to a variable memory relate to read orders (the remaining 25% relate to write orders) and with about 25% of all read orders (i.e. about 20% of all write/read orders), the pointer device receives an individual number that coincides with the individual number used of the respective function block immediately prior thereto in conjunction with a read order. An instruction subroutine which does not contain instructions that are directed to the variable memory is normally implemented between said two instructions directed to one and the same individual.

When practicing the present invention, individual numbers are stored temporarily so as to enable comparisons to be made with the numbers that are obtained immediately thereafter. In the aforesaid 20% of all memory operations, individual number equality is obtained in combination with a prevailing read order. The associated read data variables are stored temporarily parallel with the individual numbers in a conventional variable register included in the variable memory device. When individual-number-equality occurs in combination with a prevailing read order, no pointer value is calculated but the temporarily stored variable is transmitted to the data system. In this way, the load of the pointer device is decreased, and the time required to calculate the pointer values for access to storage locations assigned to respective individual and the time needed to read the variable stored therein is saved in the aforesaid 20% of all memory operations, wherein the only additional hardware required by the system is a comparator and an intermediate register.

In some few per cent of all memory operations, individual-number-equality occurs with a prevailing read order which is ordered immediately after a write-in. As will be apparent from the following description, the suggested saving in access time can be achieved without the need for further additional hardware, even in the aforesaid few per cent of the memory operations.

The inventive method and inventive apparatus are characterized by the characteristic features set forth in the following Claims.

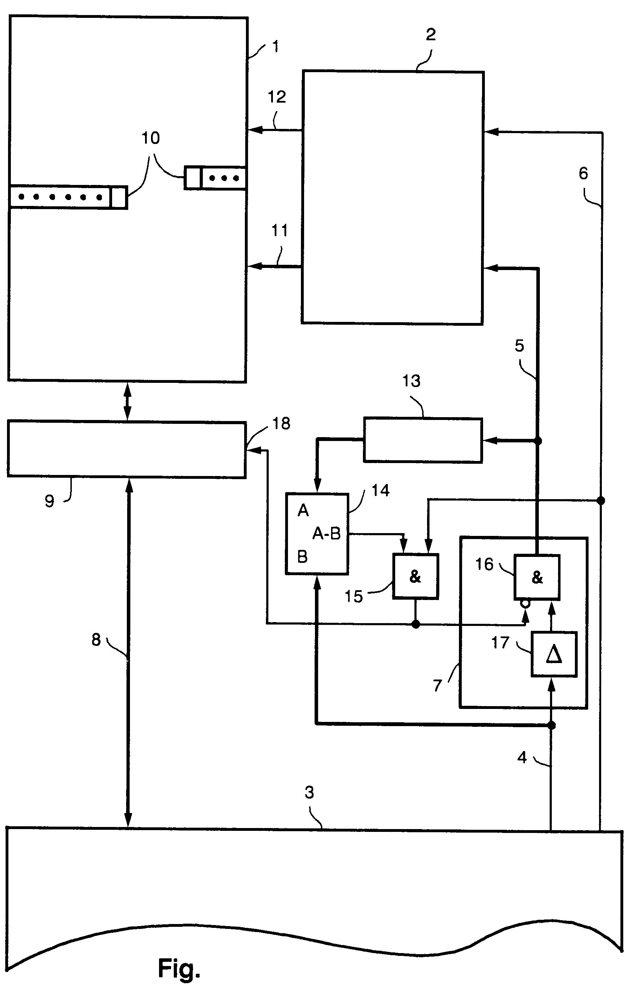

### BRIEF DESCRIPTION OF THE DRAWING

The invention will now be described in more detail with reference to the accompanying drawing, the single Figure of which illustrates a variable memory device 1, 9 and a pointer device 2, all of which are connected to a function-block-oriented data processing system 3. The inventive time saving and load decreasing is achieved with the aid of an intermediate register 13, a comparator 14 and control gate circuits 7, 15.

### DESCRIPTION OF THE BEST MODE OF CARRYING OUT THE INVENTION

In the case of a function-block-oriented data processing system known, for instance, from U.S. Patent Specification No. 3,969,701, each of a plurality of function blocks includes a data variable-memory device and a pointer device in order to provide access to the storage locations of the memory device, as described in the introduction. The drawing illustrates a variable memory 1 and a pointer device 2 which are assigned to the same function block. The pointer device is intended to receive individual numbers parallel with write/read orders successively from a data processing system 3, via order lines 4, 5, 6 which are assigned to the function block concerned, and via a gate circuit 7. When the pointer device 2 receives an individual number and a write order, a data variable is transmitted from the data processing system 3 to the storage locations 10 indicated by the individual number, said variable being transmitted via a data line 8 belonging to the function block and also via a data variable register 9 included in the memory device. When the pointer device 2 receives an individual number and a read order, a data variable is transmitted from indicated storage locations 10 to the data processing system 3, via the data variable register 9 and the data line 8. Indicated on the drawing are a number of storage locations which form the end of a first storage location row and the beginning of a second storage location row in which there is stored a data variable which belongs to one of the individuals of the function block. Access to the storage locations for the purpose of writing/reading the variables is achieved in a conventional manner, with the aid of an individual-associated memory pointer value, which is calculated by the pointer device. In the illustrated embodiment, the variable memory is connected to the pointer device by means of a pointer line 11 and a write/read activating line 12. For the sake of illustration, the microprogramme control used conventionally in conjunction with writing/reading of the data variables has not been shown in the drawing.

The additional hardware used to obtain the inventive time saving and load decreasing facility includes the aforesaid gate circuit 7, an individual number register 13, whose input is connected to the line 5 for transmitting individual numbers from the gate circuit to the pointer device, a comparator 14, and a first AND-control gate 15 whose inputs are connected respectively to the output of the comparator and to the line 6 on which write/read orders are transmitted from the data processing system to the pointer device. The inputs of the comparator 14 are connected respectively to the individual number register 13 and to said line 4 on which individual numbers are transmitted from the data processing system 3 to the gate circuit 7.

The gate circuit 7 includes a second AND-control gate 16, the output of which is connected to the individual number line 5, and a delay element 17 which is arranged between the individual number line 4 and an input of the gate 16. The output of the gate 15 is connected to an inverted input of the gate 16 and also to an activating input 18 of the data variable register 9.

In the case of the illustrated system, it is assumed that a logic "O"/"1"-signal is used to transmit a write/read order on line 6. The comparator 14 signals equality between incoming individual numbers A and B with a logic "1". Consequently, the control gate 15 will generate a logic "1" signal solely on the basis of equal individual numbers A and B in conjunction with a prevailing read order, whereas said gate generates a logic "O" signal on the basis of a prevailing write order, irrespective of the comparator signalling, or on the basis of different numbers A and B, irrespective of the nature of the order.

The intermediate registers 9 and 13 are non-destructive registers, i.e. the contents of a register can be read repeatedly until the register content is changed. A logic "1" signal received on the activating input 18 activates transmission of the data variable registered in the register 9 to the data processing system 3. Such transmissions terminate otherwise normal read operations carried out by means of the pointer device 2. The presence of the delay element 17 guarantees that the line 5 will not recieve a new individual number before the comparator 14 and the control gate 15 have completed their logic functions. This guarantee is achieved in practice by means of the microprogramme control not shown in the drawing.

By way of example, it is assumed that I1, I2, I3 are three individual numbers transmitted successively on the order line 4, wherein I1 ≠ I2 and I2 = I3, and wherein I1 belongs to a write order, I3 belongs to a read order, whereas the type of the order belonging to I2 is abritrary. In response to the write order signal transmitted parallel with the individual number I1, the control gate 15 transmits a logic "O" signal which causes the control gate 16 to transmit the individual number I1 to the pointer device 2 and to the individual number register 13. The pointer device functions to calculate the pointer value belonging to I1, and by means of which a write operation is carried out, wherein the data variable register 9 registers the variable V1 which has been transmitted from the data processing system 3 in parallel with I1. The control gate 16 remains activated even when processing the individual number 12, since the comparator 14 signals the inequality I1 ≠ I2. Upon completion of the memory operation ordered by means of I2, I2 and the variable V2 write/read-processed herewith are registered in the registers 13 and 9. However, as a result of the read order signal obtained from the system 3 parallel with the individual number I3, and because the comparator 14 signals the equality I2 = I3, the control gate 15 transmits a logic "1" signal which activates the activating input 18 of the data variable register 9 and deactivates the control gate 16. The read operation ordered during the use of the individual number I3 is therewith stopped, and the time required for a normal read operation is saved, and the data processing system 3 receives the relevant variable V2 = V3 quickly and directly from the register 9.

## Claims

1. A method of saving time when reading data variables stored in a memory device (1) and of decreasing the load of a pointer device (2), wherein the pointer device controlled by a data processing system (3) and connected exclusively to the memory device successively receives individual numbers, each of which is converted singly to its respective memory pointer value for the purpose of obtaining access to storage locations (10) indicated thereby, said storage locations being assigned to an individual identified by means of an individual number, and wherein the memory device includes a variable register (9) for storing temporarily a data variable which, in response to an individual-relative write and read order respectively is transmitted from the data processing system to the storage locations assigned to said individual, and vice versa,
**characterized** by
- storing temporarily (13) a first individual number;
- comparing (14) the first individual number with a second individual number obtained from the data processing system immediately after the first individual number;
- generating a contgrol signal (15) when the comparison shows equality and when the second individual number belongs to a read order;
- stopping (7) the calculation of the pointer value belonging to the second individual number, with the aid of said control signal; and
- using said control signal to activate (18) the variable register such as to transmit the temporarily stored variable to the data processing system.

2. An apparatus for saving time when reading data variables stored in a memory device (1) and for decreasing the load of a pointer device (2), in accordance with Claim 1, wherein the pointer device controlled by a data processing system (3) and connected exclusively to the memory device receives successively individual numbers, each of which is converted singly to its respective memory pointer value, in order to achieve access to storage locations (10) indicated thereby, said storage locations being assigned to an individual identified by an individual number, and wherein the memory device includes a variable register (9) for storing temporarily a data variable which in response to an individual-relative write and read order respectively is transmitted from the data processing system to the storage locatins assigned to said individual, and vice versa, **characterized** by
- an intermediate register (13) for storing temporarily a first individual number;
- a comparator (14) for comparing the first individual number with a second individual number obtained from the data processing system immediately after the first individual number;
- a control signal generator (15) which generates a control signal when the comparison shows equality and when the second individual number belongs to a read order;
- a stop circuit (7) for stopping the calculation of the pointer value belonging to the second individual number, in response to said control signal; and by
- an activating input (18) of the variable register for activating transmission of the temporarily stored variable to the data processing system, in response to said control signal.
